# EUROPEAN PATENT APPLICATION

(11) **EP 4 787 532 A1**
(43) Date of publication of application: **05.08.2026**
(21) Application number: 24872363.7
(22) Date of filing: 26.09.2024
(51) Int. Cl.: H01M 10/058, H01M 4/13, H01M 10/052, H01M 10/0587, H01M 50/414, H01M 50/446, H01M 50/463

(54) **SECONDARY BATTERY**

(30) Priority: 28.09.2023 JP 2023168679
(71) Applicant: Panasonic Intellectual Property Management Co., Ltd., Kadoma-shi, Osaka 571-0057 (JP)
(72) Inventor: MORIYAMA, Toshitaka, Osaka 571-0057 (JP)
(74) Representative: Eisenführ Speiser
(86) International application number: PCT/JP2024/034366
(87) International publication number: WO 2025/070578

(57) **Abstract**

A secondary battery includes a positive electrode, a negative electrode, a separator disposed between the positive electrode and the negative electrode, and an electrolyte. The separator includes a sheet-like substrate, and a spacer disposed on a principal surface of the substrate. The positive electrode contains a positive electrode active material. The positive electrode has a region Al of at least a part of an end portion of the positive electrode, and a region A2 except the region A1. A packed amount M1 of the positive electrode active material per unit area in the region A1 is smaller than a packed amount M2 of the positive electrode active material per unit area in the region A2.

## Description

### [Technical Field]

The present invention relates to a secondary battery.

### [Background Art]

A secondary battery includes an electrode group and a nonaqueous electrolyte. The electrode group includes a positive electrode, a negative electrode, and a separator disposed between the positive electrode and the negative electrode.

One possible method for suppressing the volume changes of the electrode group during charging and discharging of a secondary battery is to place a spacer on a principal surface of the substrate of the separator.

Patent Literature 1 proposes "an electrode group for a nonaqueous secondary battery, comprising: a positive electrode plate including a positive electrode current collector, and a positive electrode mixture layer formed by applying a positive electrode mixture coating material prepared by dispersing an active material composed of at least a lithium-containing composite oxide, a conductive material, and a binder, in a dispersion medium, and kneading them together, onto the positive electrode current collector; and a negative electrode plate including a negative electrode current collector, and a negative electrode mixture layer formed by applying a negative electrode coating material prepared by dispersing an active material composed of at least a material capable of retaining lithium, and a binder, in a dispersion medium, and kneading them together onto the negative electrode current collector, the positive electrode plate and the negative electrode plate being wound together spirally, or stacked together in a zigzag manner, with a porous insulator interposed therebetween, wherein a spacer composed of a resin that softens with a nonaqueous electrolyte and relaxes a stress associated with expansion and contraction of the electrode plates during charging and discharging is disposed between the positive electrode plate and the porous insulator or between the negative electrode plate and the porous insulator".

### [Citation List]

### [Patent Literature]

Patent Literature 1: Japanese Laid-Open Patent Publication No. 2011-008929

### [Summary of Invention]

### [Technical Problem]

In the secondary battery including a spacer, improvement in cycle characteristics is required.

### [Solution to Problem]

One aspect of the present disclosure relates to a secondary battery, including: a positive electrode; a negative electrode; a separator disposed between the positive electrode and the negative electrode; and a nonaqueous electrolyte, wherein the separator includes a sheet-like substrate, and a spacer disposed on a principal surface of the substrate, the positive electrode contains a positive electrode active material, the positive electrode has a region A1 of at least a part of an end portion of the positive electrode, and a region A2 except the region A1, and a packed amount M1 of the positive electrode active material per unit area in the region A1 is smaller than a packed amount M2 of the positive electrode active material per unit area in the region A2.

### [Advantageous Effects of Invention]

According to the present disclosure, it is possible to suppress the deterioration in cycle characteristics of the secondary battery including a spacer.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A schematic longitudinal sectional view of an example of a secondary battery according to an embodiment of the present disclosure.
[FIG. 2] A schematic sectional view of an essential part of the secondary battery of FIG. 1.
[FIG. 3] A schematic sectional view of an example of a positive electrode.
[FIG. 4] A schematic top view of an example of a positive electrode.
[FIG. 5] A schematic top view of an example of a spacer.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A secondary battery according to an embodiment of the present disclosure includes an electrode group, and a nonaqueous electrolyte. The electrode group includes a positive electrode, a negative electrode, and a separator disposed between the positive electrode and the negative electrode. The positive electrode includes a positive electrode active material that absorbs and releases lithium ions. The negative electrode includes a negative electrode active material and/or a negative electrode current collector. The separator includes a sheet-like substrate, and a spacer disposed on a principal surface of the substrate. The spacer may be disposed on one principal surface of the substrate, and may be disposed on both principal surfaces of the substrate. The positive electrode and negative electrode are, for example, sheet-like or belt-shaped.

The shape of the electrode group is not particularly limited. The electrode group may be a wound electrode group in which a belt-shaped positive electrode and a belt-shaped negative electrode are spirally wound, with a separator interposed therebetween, and may be a flat electrode group in which a wound electrode group is pressed in the radial direction. The electrode group may be constituted by stacking the positive electrode and the negative electrode with a separator interposed therebetween, and may be constituted by stacking the positive electrode and the negative electrode in a zigzag manner with a separator interposed therebetween.

Secondary batteries include lithium-ion batteries and lithium secondary batteries (lithium-metal secondary batteries). The negative electrode of a lithium-ion battery expands by absorbing lithium ions during charging. The negative electrode of a lithium secondary battery expands by deposition of lithium metal thereon during charging. Among secondary batteries, in lithium secondary batteries, the degree of expansion of the negative electrode due to Li deposition is high, and the volume changes of the electrode group are large.

In secondary batteries, due to the volume changes of the electrode group during charging and discharging, there may occur a damage to the components of the electrode group, a buckling of the electrode, an internal short circuit, and others. As a result, the cycle characteristics may deteriorate in some cases. To address this, for lithium secondary batteries, the volume changes of the electrode group during charging and discharging can be suppressed by placing a spacer (protruding portions) for accommodating the deposited Li between the positive electrode and the negative electrode. For lithium-ion batteries, the volume changes of the electrode group during charging and discharging can be suppressed by placing a spacer having a flexibility between the positive electrode and the negative electrode.

However, at the end portion of the electrode group (e.g., the end portion corresponding to an end face of a columnar-shaped wound electrode group), the strength to hold the electrode group is weak. Even though a spacer is placed, volume changes will occur during charging and discharging, and the negative electrode tends to be stretched. When the negative electrode located at the end portion of the electrode group is stretched, the area that does not face the positive electrode increases, and in association therewith, the amount of Li (or Li ions) that fails to contribute to the battery reactions may increase in the negative electrode, which may cause the cycle characteristics to deteriorate.

In light of the above, the present inventor has conducted extensive studies, and newly found that by reducing the packed amount of the positive electrode active material in at least a partial region of the positive electrode end portion to be smaller than that in the other region, thereby to reduce the degree of expansion of the negative electrode facing the positive electrode end portion, the volume changes at the end portion of the electrode group (stretching of the negative electrode located at the end portion of the electrode group) can be suppressed, and the deterioration in cycle characteristics can be suppressed.

In a secondary battery according to an embodiment of the present disclosure, the positive electrode has a region A1 of at least a part of the end portion of the positive electrode, and a region A2 except the region A1. A packed amount M1 of the positive electrode active material per unit area in the region A1 is smaller than a packed amount M2 of the positive electrode active material per unit area in the region A2. Especially in lithium secondary batteries, in which the volume changes of the electrode group are large, the cycle characteristics improvement effect produced by forming the region A1 can be remarkably obtained.

The end portion of the positive electrode is a portion that is along the outline of the positive electrode when viewed in plan (when viewed in the direction normal to the principal surface of the positive electrode), and is, for example, a portion that is 20 mm or less (or 10 mm or less, or 5 mm or less) away from the rim of the positive electrode. The region A1 may be formed in a width of 20 mm or less (or 10 mm or less, or 5 mm or less) along the outline of the positive electrode.

The region A1 may be formed in the entire positive electrode end portion, or may be formed in a part of the positive electrode end portion. The region A1 may be a single region, or may be divided into a plurality of regions. The portion of the positive electrode packed with the positive electrode active material has the regions A1 and A2.

The positive electrode includes, for example, a positive electrode current collector, and a positive electrode mixture layer containing a positive electrode active material. The positive electrode mixture layer is supported on a principal surface of the positive electrode current collector. In this case, the positive electrode mixture layer has a region A1 and a region A2. That is, when the positive electrode is viewed in plan (when viewed in the direction normal to the principal surface of the positive electrode (positive electrode mixture layer)), the positive electrode mixture layer has a region A1 of at least a part of the end portion of the positive electrode mixture layer, and a region A2 except the region A1. A packed amount M1 of the positive electrode active material per unit area in the region A1 of the positive electrode mixture layer (a packed amount per side of the positive electrode current collector) is smaller than a packed amount M2 of the positive electrode active material per unit area in the region A2 of the positive electrode mixture layer (a packed amount per side of the positive electrode current collector). The principal surface of the positive electrode current collector may be provided at a part thereof with a region where the positive electrode mixture layer is not supported (a current collector exposed part). In a belt-shaped positive electrode, for example, a current collector exposed part may be formed along the width direction, near the center in the longitudinal direction. The current collector exposed part is used, for example, as a connection part with a positive electrode lead.

The positive electrode mixture layer may be formed on one principal surface of the positive electrode current collector, and may formed on both principal surfaces of the positive electrode current collector. In the secondary battery, a positive electrode having positive electrode mixture layers supported on both principal surfaces of the positive electrode current collector may be used, and a separator and a negative electrode may be disposed on both sides of the positive electrode.

When the positive electrode mixture layer is formed on both principal surfaces of the positive electrode current collector, the positive electrode mixture layer formed on one principal surface of the positive electrode current collector and the positive electrode mixture layer formed on the other principal surface each have the regions A1 and A2, and satisfy M1 < M2. That is, the region A1 (the region A2 except the region A1) includes a region A1a (a region A2a except the region A1a) in the positive electrode mixture layer formed on one principal surface Sa of the positive electrode current collector, and a region A1b (a region A2b except the region A1b) in the positive electrode mixture layer formed on the other principal surface Sb of the positive electrode current collector. A packed amount M1a of the positive electrode active material per unit area in the region A1a is smaller than a packed amount M2a of the positive electrode active material per unit area in the region A2a. A packed amount M1b of the positive electrode active material per unit area in the region A1b is smaller than a packed amount M2b of the positive electrode active material per unit area in the region A2b. The M1a is a mass of the positive electrode active material packed per unit area in a region corresponding to the region A1a on one principal surface Sa of the positive electrode current collector. The M2a is a mass of the positive electrode active material packed per unit area in a region corresponding to the region A2a on one principal surface Sa of the positive electrode current collector. The M1b is a mass of the positive electrode active material packed per unit area in a region corresponding to the region A1b on the other principal surface Sb of the positive electrode current collector. The M2b is a mass of the positive electrode active material packed per unit area in a region corresponding to the region A2b on the other principal surface Sb of the positive electrode current collector. Although the M1a may be different from the M1b, it is desirable that they are substantially the same. Although the M2a may be different from the M2b, it is desirable that they are substantially the same.

When the positive electrode is viewed in plan, although the positions of the regions A1a and A1b may not coincide with each other, it is desirable that the positions of the regions A1a and A1b almost coincide with each other. That is, it is desirable that the regions A1a and A1b are formed so as to overlap each other with the positive electrode current collector interposed therebetween. When the positive electrode is viewed in plan, although the areas of the regions A1a and A1b may be different, it is desirable that they are substantially the same.

It suffices when at least a center portion of the positive electrode has a portion overlapping the spacer. From the viewpoint of the stability of the shape of the electrode group, it is preferable that both the end portion and the center portion of the positive electrode have a portion overlapping the spacer. When the positive electrode is viewed in plan, the portion where the end portion of the positive electrode overlaps the spacer is, for example, a portion 10 mm or less (preferably 5 mm or less) away from the end of the positive electrode.

From the viewpoint of suppressing the volume changes of the electrode group, it is preferable that the region A1 of the positive electrode (positive electrode mixture layer) has a portion P overlapping the spacer. In this case, in the lithium secondary battery, a space for accommodating the deposited Li can be easily formed between the positive and negative electrodes, but on the other hand, in the vicinity the portion P, the thickness of the deposited Li may locally increase due to the Li deposited like coming around toward the spacer, and other causes. As a result, the stress may locally concentrate at the vicinity of the portion P, causing a damage etc. to the substrate, and the cycle characteristics may deteriorate. In the present disclosure, the packed amount of the positive electrode active material in the region A1 is small, and the expansion of the negative electrode facing the region A1 is suppressed. Thus, the local increase of the thickness of the deposited Li in the vicinity of the portion P, and the deterioration in cycle characteristics resulted therefrom can be suppressed.

From the viewpoint of suppressing the deterioration in cycle characteristics, a ratio M1/M2 of the packed amount M1 of the positive electrode active material per unit area in the region A1 to the packed amount M2 of the positive electrode active material per unit area in the region A2 is preferably 0.95 or less. From the viewpoints of easing the production of the positive electrode and ensuring the capacity, the M1/M2 is, for example, 0.5 or more, preferably 0.6 or more, more preferably 0.75 or more. The range of M1/M2 may be, for example, 0.5 or more and 0.95 or less, preferably 0.6 or more and 0.95 or less, more preferably 0.75 or more and 0.95 or less. When the positive electrode mixture layer is formed on both surfaces of the positive electrode current collector, it is preferable that the M1/M2 is within the above range in each of the both positive electrode mixture layers formed on one principal surface of the positive electrode current collector and the other principal surface of the positive electrode current collector. That is, it is preferable that both the M1a/M2a and the M1b/M2b are within the above range of the M1/M2 (e.g., 0.95 or less).

From the viewpoint of easing the production of the positive electrode and ensuring the capacity, the packed amount M2 of the positive electrode active material per unit area in the region A2 is preferably 100 g/m² or more and 300 g/m² or less, more preferably 200 g/m² or more and 300 g/m² or less. When the positive electrode mixture layer is formed on both surfaces of the positive electrode current collector, it is preferable that the M2 is within the above range in each of the both positive electrode mixture layers formed on one principal surface of the positive electrode current collector and the other principal surface of the positive electrode current collector. That is, it is preferable that both the M2a and the M2b are within the above range of M2 (e.g., 100 to 300 g/m²).

The packed amount of the positive electrode active material (e.g., lithium-containing transition metal oxide) can be determined, for example, by the following method.

A secondary battery in a discharged state (depth of discharge 90% or more) is disassembled, to take out the positive electrode, from which the positive electrode mixture is collected by peeling off from the positive electrode current collector. The positive electrode mixture is washed with a nonaqueous solvent (DMC etc.), and then dried, to measure a mass of the positive electrode mixture. Next, the positive electrode mixture is dissolved in a predetermined acid solution, and the insoluble matter (e.g., a resin material serving as a binder, a carbon material serving as a conductive material) is separated by filtration or the like, washed with water, and then dried, to measure a mass of the insoluble matter. The value obtained by subtracting the mass of the insoluble matter from the mass of the positive electrode mixture is determined as a mass PM of the positive electrode active material. The area CS of the region from which the positive electrode mixture has been peeled off in the positive electrode current collector is measured. PM/CS is calculated. For the region A1, it is calculated as the aforementioned packed amount M1. For the region A2, it is calculated as the aforementioned packed amount M2.

When the positive electrode is viewed in plane, a ratio S1/S0 of an area S1 of the region A1 to an area S0 (the total area of the region A1 and the region A2) of the principal surface of the positive electrode (positive electrode mixture layer) may be, for example, 0.07 to 0.71, and may be 0.07 to 0.36. In the case where the region A1 is formed in a plurality of places, the area S1 of the region A1 is the total area of the plurality of places. When the S1/S0 is 0.71 or less, the proportion of the region A1 in the positive electrode is sufficiently small. This can reduce the influence on the capacity due to the packed amount of the positive electrode active material in the region A1 being small, and can sufficiently ensure high capacity. When the S1/S0 is 0.07 or more, the cycle characteristics improvement effect produced by disposing the region A1 can be sufficiently obtained. When the positive electrode mixture layer is formed on both surfaces of the positive electrode current collector, it is preferable that the S1/S0 is within the above range in each of the both positive electrode mixture layers formed on one principal surface of the positive electrode current collector and on the other principal surface of the positive electrode current collector.

In a belt-shaped positive electrode, the end portion of the positive electrode may include both widthwise end portions of the positive electrode, and the region A1 may be a region a corresponding to the both widthwise end portions of the positive electrode. In a cylindrical-shaped wound electrode group, the region A1 (region a) can be efficiently disposed at the ends corresponding to the both end faces of the electrode group. The positive electrode can be produced by, for example, applying a positive electrode slurry onto a surface of a long-length positive electrode current collector, and after drying, rolling the applied film with a roller, to form a positive electrode mixture layer. The positive electrode can be continuously produced by a roll-to-roll system. The region A1 and the region A2 can be efficiently formed by adjusting the amounts of the positive electrode slurry applied to a region corresponding to the region A1 and a region corresponding to the region A2 of the positive electrode current collector.

In the case of a wound electrode group, the end portion of the positive electrode includes the both widthwise end portions of the positive electrode, and a winding-start end portion of the positive electrode. The region A1 may be the region a corresponding to the both widthwise end portions of the positive electrode, and may be a combined region of the region a corresponding to the both widthwise ends of the positive electrode and a region b corresponding to the winding-start end portion of the positive electrode.

The region A1 may be formed limitedly at a place that is easily subjected to a stress in the end portion of the positive electrode. The region A1 may be formed at a portion corresponding to the bent portion in an electrode group in which the positive and negative electrodes are stacked in a zigzag manner, may be formed at a portion (the above region b) corresponding to the innermost layer of a wound electrode group, and may be formed at a portion corresponding to a place with a small radius of curvature in a flat electrode group.

The negative electrode and the separator may be disposed on both sides of the positive electrode, and may be disposed on one side of the positive electrode. In a wound (flat) electrode group, the negative electrode and the separator are disposed on both sides (on the outer layer side and the inner layer side) of the positive electrode. The spacers disposed on both sides (on the outer layer side and the inner layer side) of the positive electrode may be arranged so as to overlap each other, with the positive electrode interposed therebetween, and may be arranged with their positions displaced entirely or partially. The spacers disposed on both sides (on the outer layer side and the inner layer side) of the positive electrode may be arranged in the same pattern or different patterns.

The secondary battery will be described below in detail.

### (Lithium secondary battery)

The lithium secondary battery includes a positive electrode, a negative electrode at which lithium metal deposits during charging and the lithium metal dissolves into nonaqueous electrolyte during discharging, a separator disposed between the positive electrode and the negative electrode, and a nonaqueous electrolyte. The negative electrode includes at least a negative electrode current collector, and lithium metal deposits on the negative electrode current collector during charging. The nonaqueous electrolyte has lithium ion conductivity.

In the lithium secondary battery, 70% or more, for example, of the rated capacity is exhibited through deposition and dissolution of lithium metal. The migration of electrons at the negative electrode during charging and during discharging is mainly due to the deposition and the dissolution of lithium metal at the negative electrode. Specifically, 70 to 100% (e.g., 80 to 100%, 90 to 100%) of the migration of electrons (in another aspect, electric current) at the negative electrode during charging and during discharging is due to the deposition and the dissolution of lithium metal. That is, the negative electrode of the lithium secondary battery differs from the negative electrode in which the migration of electrons at the negative electrode during charging and during discharging is mainly due to absorption and release of lithium ions by the negative electrode active material (graphite etc.).

### (Separator)

The separator includes a sheet-like substrate, and a spacer disposed on a principal surface of the substrate. The spacer preferably includes protruding portions. The protruding portions can easily form a space between the positive electrode and the negative electrode.

### (Substrate)

For the substrate, a porous sheet with ion permeability and electrically insulating properties is used. The porous sheet may be, for example, a microporous thin film, woven fabric, nonwoven fabric, and the like. The material of the porous sheet is not particularly limited, and may be a polymer material. Examples of the polymer material include an olefin resin, a polyamide resin, and cellulose. Examples of the olefin resin include polyethylene, polypropylene, and an ethylene-propylene copolymer. The substrate may contain an additive, as necessary. Examples of the additive include an inorganic filler.

The thickness of the substrate is, although not particularly limited to, for example, 5 µm or more and 20 µm or less, more preferably 10 µm or more and 20 µm or less.

The substrate may include a porous sheet, and a composite material layer (heat-resistant layer). The composite material layer may be formed on one principal surface, and may be formed on both principal surfaces of the porous sheet. The composite material layer is permeable to lithium ions. The composite material layer contains inorganic particles. The composite material layer may contain a resin material, as necessary. The thickness of the composite material layer may be 5% to 50% of the overall thickness of the substrate.

The composite material layer may be disposed on the side facing the positive electrode of the porous sheet, and may be on the side facing the negative electrode of the porous sheet. When the composite material layer is disposed on the side facing the positive electrode, the deterioration of the porous sheet due to oxidation reaction can be suppressed. When the composite material layer is disposed on the side facing the negative electrode, the deterioration of the porous sheet due to reduction reaction can be suppressed. A spacer may be disposed on the composite material layer. In this case, the effect of suppressing the thermal shrinkage of the substrate is particularly enhanced.

The inorganic particles are preferably particles of an inorganic compound having thermal stability and electrically insulating properties, which is unlikely to melt or decompose in the event of abnormal heat generation due to a short circuit of the battery or other causes. Examples of the material of the inorganic particles include an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide, and boron carbide. Examples of the sulfide include barium sulfate. Examples of the hydroxide include aluminum hydroxide. The median diameter in a volume-based particle size distribution of the inorganic particles may be 0.2 to 2.0 µm.

The median diameter in a volume-based particle size distribution of the inorganic particles can be measured, for example, with a laser diffraction-scattering type particle size distribution analyzer (e.g., Microtrac manufactured by Nikkiso Co., Ltd.). Alternatively, a cross section of the substrate may be observed with a transmission electron microscope (TEM), to obtain a TEM image. Then, with respect to randomly selected 100 inorganic particles, an area surrounded by the contour of each particle is calculated, and a diameter of an equivalent circle (perfect circle) having the same area as the calculated area is determined, to determine the median diameter as an average value of the diameters of the 100 equivalent circles.

Examples of the resin material contained in the composite material layer (heat-resistant layer) include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

The resin material contained in the composite material layer (heat-resistant layer) is desirably a polymer material having higher heat resistance than the material of the porous sheet. Such a polymer material preferably includes at least one selected from the group consisting of an aromatic polyamide, an aromatic polyimide, and an aromatic polyamide imide. These are known as polymers having high heat resistance. From the viewpoint of the heat resistance, aramids, i.e., meta-aramids (meta-type wholly-aromatic polyamides) and para-aramids (para-type wholly-aromatic polyamides), are preferred.

The content ratio of the inorganic particles in the composite material layer may be in the range of 50 mass% to 99 mass% (e.g., in the range of 85 mass% to 99 mass%).

The composite material layer is formed by, for example, applying an application liquid containing inorganic particles, a resin material, and a liquid component (dispersion medium), onto a porous sheet, and drying the applied film. Examples of the liquid component include N-methyl-2-pyrrolidone.

### (Spacer)

The spacer is formed on a principal surface of the substrate. From the viewpoints of the ease of forming of an electrode group and others, it is preferable that the substrate and the spacer are integrated. The spacer may be provided on a principal surface facing the positive electrode of the substrate (a principal surface on the positive electrode side of the substrate), may be provided on a principal surface facing the negative electrode of the substrate (a principal surface on the negative electrode side of the substrate), and may be provided on both principal surfaces. When the spacer is provided on the principal surface facing the positive electrode of the substrate, as compared to when the spacer is provided on the principal surface facing the negative electrode of the substrate, Li deposits between the spacers so as to extend the substrate toward the positive electrode. Therefore, a compressive stress is generated in the deposited Li, and Li can easily deposit densely. From the viewpoint of improving the discharge efficiency and the cycle characteristics, the spacer is preferably provided on the principal surface facing the positive electrode of the substrate. On the other hand, when the spacer is provided on the principal surface facing the negative electrode of the substrate, a space is formed in advance between the substrate and the negative electrode, and therefore, the tensile load against the substrate that occurs in association with the deposition of Li is reduced. In other words, it is advantageous in maintaining the insulating properties of the substrate, or maintaining the short-circuit resistance of the substrate.

In a lithium secondary battery, the major role of the spacer is to form a space for allowing lithium metal to deposit therein. The lithium metal will be accommodated in the space secured by the spacer, which can suppress the expansion of the negative electrode during charging.

The spacer may contain a resin material (e.g., an insulating resin), and may contain a resin material and particles. The proportion of the resin material in the spacer may be 10 vol% or more, 30 vol% or more, or 50 vol% or more, and may be 100 vol% or less, or 80 vol% or less.

Examples of the resin material contained in the spacer include: fluorine-containing resin, such as polyvinylidene fluoride (PVdF) and polytetrafluoroethylene; fluorine-containing rubber, such as vinylidene fluoride-tetrafluoroethylene copolymer and ethylene-tetrafluoroethylene copolymer; rubbers, such as styrene-butadiene copolymer or hydrogenated product thereof, acrylonitrile-butadiene copolymer or hydrogenated product thereof, methacrylic acid ester-acrylic acid ester copolymer, styrene-acrylic acid ester copolymer, acrylonitrile-acrylic acid ester copolymer, ethylene propylene rubber, and polyvinyl acetate; cellulose derivatives, such as ethyl cellulose, methyl cellulose, hydroxyethyl cellulose, and carboxymethyl cellulose; acrylic resin, such as acrylic acid-methacrylic acid copolymer; polyphenylene ether; polysulfone; polyether sulfone; polyphenylene sulfide; polyetherimide; polyimide; polyamide, such as fully aromatic polyamide (aramid); polyamide imide; polyacrylonitrile; polyvinyl alcohol; polyether; polyacrylic acid; polymethacrylic acid; polyester; polyolefin; silicone resin; urethane resin; melamine resin; urea resin; and epoxy resin.

Among the above resin materials, as a material that is not permeable to lithium ions, polyimide, polyvinylidene fluoride, and acrylonitrile-acrylic acid ester copolymer, and the like are preferably used, and polyimide may be used. A non-porous spacer of a certain height or higher formed from any of these resin materials serves as a layer that is not permeable to lithium ions. From the viewpoint of suppressing the increase of the reaction speed of gas generation in the event of an internal short circuit, it is preferable to dispose such a spacer.

The particles may be inorganic particles, and may be organic particles. In particular, inorganic particles of a metal oxide, a metal hydroxide, a metal nitride, a metal carbide, a metal sulfide, and the like, with insulating properties can be used. Preferred examples of the metal oxide include aluminum oxide (alumina, boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Minerals, such as aluminosilicate, layered silicate, barium titanate, and strontium titanate, may also be used. In particular, alumina, silica, titania, and the like are preferably used.

The average particle diameter of the particles, although not particularly limited to, may be 0.1 µm or more or 0.5 µm or more, and may be 10 µm or less, 5 µm or less, or 2 µm or less. The average particle diameter can be measured in the following manner. First, a cross section of the spacer in the thickness direction of the separator is photographed with an electron microscope, to obtain an image of the cross section. Next, the image is subjected to image processing, such as binarization, to identify the particle portion. Next, the diameter (circle equivalent diameter) of a circle having the same area as the cross section area of each particle is obtained, to calculate an arithmetic average of the circle equivalent diameters, which can be determined as the average particle diameter. The arithmetic average can be obtained, for example, from 100 or more particles. The average particle diameter of other particles contained in the electrode plate and the separator can also be obtained in a similar manner.

When the spacer contains a resin material and particles, the content ratio of the particles in the spacer is preferably 50 vol% or less. This makes it easy to ensure sufficient strength of the spacer.

The spacer may include linear protruding portions and/or dotted protruding portions. In one aspect, the linear protruding portions are protruding portions shaped like ridges. The linear protruding portions may be disposed intermittently, and may be disposed continuously. The linear protruding portions may be disposed in a straight shape, and may be disposed in a curved shape.

The width of the linear protruding portions may be 100 µm or more, or 200 µm or more, and may be 2000 µm or less, or 1000 µm or less.

The spacer preferably has a predetermined repeating pattern. That is, it is preferable that the protruding portions are arranged in a predetermined repeating pattern. The linear protruding portions may be arranged in a stripe pattern. A plurality of the linear protrusions may be arranged in parallel to and spaced apart from each other along the length direction of the substrate. The linear protruding portions may be arranged in a mesh pattern. The mesh pattern may be an assembly of polygons. An example of the mesh pattern includes a shape in which polygons are combined so as to share sides. The polygon includes a triangle, a square, a hexagon, and the like. Different kinds of polygons may be combined. The mesh pattern may be a honeycomb pattern.

A height H of the spacer (protruding portions) may be greater than a thickness T of the substrate. A ratio H/T of the height H to the thickness T may be more than 1, and may be 1.5 or more, 2 or more, or 3 or more. The H/T may be 10 or less, 8 or less, 5 or less, or 4 or less. By setting the H/T to 1.5 or more, the expansion of the electrode group can be particularly suppressed.

The height H can be measured in the following manner. First, a cross section of the separator (substrate) in its thickness direction is photographed with an electron microscope, to obtain an image of the cross section. Next, on the image, any 20 points in the spacer are selected, to measure a height of the spacer at each of these points. Next, the heights measured at the 20 points are arithmetically averaged, and the obtained average value is determined as the height H. The thickness T can be measured in a similar manner.

The spacer is formed by, for example, applying an application liquid containing a component of the spacer and a liquid component, onto the substrate at predetermined places, and drying the applied films. Examples of the liquid component include N-methyl-2-pyrrolidone. The application may be performed using a dispenser and the like, or using a known printing method, such as gravure printing, inkjet printing, and screen printing. The drying may be performed by a known method, such as heat drying and natural drying. The spacer may be formed on a principal surface of the electrode by applying the above application liquid onto the electrode at predetermined places.

In the case of a lithium secondary battery, from the viewpoint of allowing a space for accommodating the deposited Li to be easily formed between the positive and negative electrodes, the ratio of the area S1 of the spacer disposed on the principal surface of the substrate to the area S0 of the principal surface of the substrate may be, for example, 5% or more, and may be 10% or more. From the viewpoint of ensuring a space for accommodating the deposited Li between the positive and negative electrodes, the ratio of the area S1 of the spacer disposed on the principal surface of the substrate to the area S0 of the principal surface of the substrate may be 40% or less, and may be 30% or less (or 20% or less).

### (Negative electrode)

The negative electrode includes a negative electrode current collector. In a lithium secondary battery, lithium metal deposits on a surface of the negative electrode during charging. Specifically, lithium ions contained in the nonaqueous electrolyte receive electrons on the negative electrode during charging, to be lithium metal, which deposits on the surface of the negative electrode. The lithium metal deposited on the surface of the negative electrode dissolves in the form of lithium ions in the nonaqueous electrolyte during discharging.

The negative electrode may include a lithium ion storage layer (a layer that exhibits capacity through absorption and release of lithium ions into and from the negative electrode active material (graphite, etc.)) supported on the negative electrode current collector. In this case, the open circuit potential of the negative electrode at full charge may be 70 mV or less relative to lithium metal (lithium dissolution/deposition potential). When the open circuit potential of the negative electrode at full charge is 70 mV or less relative to lithium metal, lithium metal is present on the surface of the lithium ion storage layer at full charge. That is, the negative electrode exhibits capacity through deposition and dissolution of lithium metal.

Here, "at full charge" refers to a state in which the battery is charged to, for example, a charged state of 0.98×C or more, where C is the rated capacity of the battery. The open-circuit potential of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium ion storage layer is a layer of a negative electrode mixture containing a negative electrode active material. The negative electrode mixture may contain, in addition to the negative electrode active material, a binder, a thickener, a conductive material, and the like.

Examples of the negative electrode active material include a carbonaceous material, a Si-containing material, and a Sn-containing material. The negative electrode may contain the negative electrode active material singly or in combination of two or more kinds. As the carbonaceous material, for example, graphite, graphitizable carbon (soft carbon), non-graphitizable carbon (hard carbon), and the like can be used.

The conductive material is, for example, a carbon material. Examples of the carbon material include carbon black, acetylene black, Ketjen black, and carbon nanotubes.

The binder may be, for example, a fluorocarbon resin, polyacrylonitrile, a polyimide resin, an acrylic resin, a polyolefin resin, a rubbery polymer, and the like. Examples of the fluorocarbon resin include polytetrafluoroethylene and polyvinylidene fluoride. The thickener may be carboxymethyl cellulose (CMC), a Na salt of CMC, and the like.

The negative electrode current collector may be a conductive sheet. As the conductive sheet, a foil, a film, and like are used.

The material of the negative electrode current collector (conductive sheet) may be any conductive material, except lithium metal and lithium alloy. The conductive material may be a metal material, such as metal and alloy. The conductive material is preferably a material that does not react with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, and graphite having a basal plane predominately exposed on its surface. Examples of the alloy include copper alloy and stainless steel (SUS). In particular, copper and/or copper alloy that have high electrical conductivity are preferred.

The thickness of the negative electrode current collector is not particularly limited, and is, for example, 5 µm or more and 300 µm or less.

### (Positive electrode)

The positive electrode includes, for example, a positive electrode current collector, and a positive electrode mixture layer supported by the positive electrode current collector. The positive electrode mixture layer contains, for example, a positive electrode active material, a conductive material, and a binder. The positive electrode mixture layer may be formed on only one surface or on both surfaces of the positive electrode current collector. The positive electrode can be obtained by, for example, applying a positive electrode slurry containing a positive electrode active material, a conductive material, and a binder, onto both surfaces of the positive electrode current collector, and drying the applied films, followed by rolling.

For example, the region A1 and the region A2 can be formed by adjusting the amounts of the positive electrode slurry applied to a region corresponding to the region A1 and a region corresponding to the region A2 in the positive electrode current collector. When the amount of the positive electrode mixture applied to a region corresponding to the region A1 is reduced, to reduce the packed amount of the positive electrode active material in the region A1, the mixture density in the positive electrode mixture layer formed in the region A1 is reduced. If it is necessary to ensure the strength of the region A1, a predetermined filler may be contained in the positive electrode mixture layer in the region A1. A predetermined filler may be added to the positive electrode slurry applied to a region corresponding to the region A1 in the positive electrode current collector. The filler may be an electrically insulating filler, and may be a conductive filler. By adding a filler, the mixture density in the positive electrode mixture layer can be controlled, and the thickness during compression can be easily made uniform. In addition, the uniformity of the electrode group is ensured, and the uniformity of the surface pressure during charging and discharging is ensured. Thus, the durability can be further improved.

The positive electrode active material is a material that absorbs and releases lithium ions. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its inexpensive manufacturing cost and high average discharge voltage.

The lithium contained in the lithium-containing transition metal oxide is released in the form of lithium ions from the positive electrode during charging, and deposits in the form of lithium metal on the negative electrode or on the negative electrode current collector. During discharging, the lithium metal dissolves from the negative electrode to release lithium ions, which are then absorbed into the composite oxide of the positive electrode. That is, the lithium ions involved in charging and discharging are mostly derived from the solute in the nonaqueous electrolyte and the positive electrode active material.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain these transition metal elements singly or in combination of two or more kinds. The transition metal element may be Ni, Co, and/or Mn. The lithium-containing transition metal oxide can contain one or more kinds of typical elements, as necessary. Examples of the typical element include Mg, Al, Ca, Zn, Ga, Ge, Sn, Sb, Pb, and Bi. The typical element may be Al, and the like.

Among the lithium-containing transition metal oxides, a composite oxide containing Ni, Co, and/or Mn as transition metal elements and optionally containing Al, and having a layered rock-salt type crystal structure is preferred in terms of achieving high capacity. In this case, in the lithium secondary battery, a molar ratio mLi/mM of a total amount mLi of the lithium that the positive electrode and the negative electrode have, to an amount mM of the metal M other than lithium that the positive electrode has, is set to, for example, 1.1 or less.

As the binder, the conductive material, and the like, for example, those exemplified for the negative electrode can be used. As the conductive material for the positive electrode, graphite may be used. The shape and the thickness of the positive electrode current collector can be selected from the shape and the range of the positive electrode current collector.

Examples of the material of the positive electrode current collector (conductive sheet) include a metal material containing Al, Ti, Fe, or the like. The metal material may be Al, Al alloy, Ti, Ti alloy, Fe alloy, and the like. The Fe alloy may be stainless steel (SUS).

The thickness of the positive electrode current collector is, although not particularly limited to, for example, 5 µm or more and 300 µm or less.

### (Nonaqueous electrolyte)

The nonaqueous electrolyte having lithium ion conductivity may be a liquid electrolyte (electrolyte solution), may be a gel electrolyte, and may be a solid electrolyte. The liquid electrolyte is, for example, an electrolyte solution containing a nonaqueous solvent, and a lithium salt dissolved in the nonaqueous solvent. The concentration of the lithium salt in the electrolyte solution is, for example, 0.5 mol/L or more and 2 mol/L or less. The electrolyte solution may contain a known additive.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include a fluorocarbon resin, an acrylic resin, a polyether resin, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by dissolving a lithium salt in a nonaqueous solvent. When the lithium salt dissolves in the nonaqueous solvent, lithium ions and anions are produced.

As the anions, BF₄⁻, ClO₄⁻, PF₆⁻, CF₃SO₃⁻, CF₃CO₂⁻, imide anions, an oxalate complex anion, and the like can be used. Examples of the imide anions include N(SO₂CF₃)₂⁻, and N(CₘF₂ₘ₊₁SO₂)ₓ(CₙF₂ₙ₊₁SO₂)_{y}⁻, where m and n are each independently an integer of 0 or l or more, x and y are each independently 0, 1, or 2, and satisfy x+y = 2. The oxalate complex anion may contain boron and/or phosphorus. Examples of the oxalate complex anion include bis(oxalate)borate anion, difluoro(oxalate)borate anion (BF₂(C₂O₄)⁻), PF₄(C₂O₄)⁻, and PF₂(C₂O₄)₂⁻. The nonaqueous electrolyte may contain these anions singly or in combination of two or more kinds.

From the viewpoint of suppressing the dendritic deposition of lithium metal, the nonaqueous electrolyte preferably contains at least an oxalate complex anion, and in particular, it is desirable to contain an oxalate complex anion having fluorine. The oxalate complex anion having fluorine interacts with lithium, which allows lithium metal to easily deposit uniformly in the form of fine particles. Therefore, local deposition of lithium metal can be easily suppressed. The oxalate complex anion having fluorine may be combined with another anion. The other anion may be PF₆⁻ and/or imide anions.

The nonaqueous solvent may be, for example, an ester, an ether, a nitrile, an amide, or halogen-substituted derivatives thereof. The nonaqueous electrolyte may include these nonaqueous solvents singly or in combination of two or more kinds. Examples of the halogen-substituted derivatives include a fluoride.

As the ester, for example, a carbonic acid ester, a carboxylic acid ester, and the like are exemplified. Examples of a cyclic carbonic acid ester include ethylene carbonate, propylene carbonate, and fluoroethylene carbonate (FEC). Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate.

As the ether, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is, for example, 0.5 mol/L or more and 3.5 mol/L or less. The concentration of the anions in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a coating film on the negative electrode. When a coating film derived from the additive is formed on the negative electrode, the dendrite formation and growth can be easily suppressed. Examples of such an additive include vinylene carbonate, FEC, and vinyl ethyl carbonate (VEC).

### (Lithium-ion battery)

A lithium-ion battery includes a positive electrode, a negative electrode containing a negative electrode active material that absorbs and releases lithium ions, a separator disposed between the positive electrode and the negative electrode, and a nonaqueous electrolyte. For the positive electrode and the nonaqueous electrolyte, the positive electrode and the nonaqueous electrolyte as exemplified in the lithium secondary battery can be used. The positive electrode mixture and the positive electrode current collector to be included in the positive electrode can be appropriately selected from those exemplified above. The nonaqueous solvent and the lithium salt (anion) to be contained in the nonaqueous electrolyte can be appropriately selected from those exemplified above.

The negative electrode includes, for example, a negative electrode current collector, and a negative electrode mixture layer (the aforementioned lithium ion storage layer) supported on a principal surface of the negative electrode current collector. The negative electrode mixture layer may be supported on one principal surface of the negative electrode current collector, or may be supported on both principal surfaces of the negative electrode current collector. The negative electrode mixture and the negative electrode current collector to be included in the negative electrode can be appropriately selected from those exemplified above.

For the substrate and the spacer to be included in the separator, the substrate and spacer exemplified in the lithium secondary battery can be used. The substrate may include a porous sheet containing a polymer material. The substrate may further include a composite material layer containing a resin material and inorganic particles.

The spacer included in the separator includes a resin material. The resin material to be contained in the spacer can be appropriately selected from the materials exemplified above.

In a lithium-ion battery, the spacer may be in the form of a wide sheet. In a lithium-ion battery, the spacer may be disposed limitedly at a place that is easily subjected to a large stress when the negative electrode expands. The spacer may be disposed at folded portions of an electrode group in which the positive and negative electrodes are stacked in a zigzag manner, may be disposed at the innermost layer of a wound electrode group, and may be disposed at a place with a small radius of curvature in a flat electrode group.

A description will be given below of one example of a secondary battery (lithium secondary battery) according to the present embodiment, with reference to the drawings. To the components of the below-described example of the lithium secondary battery, the components as described above can be applied. The components of the below-described example of the secondary battery can be modified based on the description above. The matters as described below may be applied to the above embodiments. In the below-described lithium secondary battery, the components which are not essential to the lithium secondary battery according to the present disclosure may be omitted. In the drawings referred to below, the scale of the components is changed to facilitate understanding.

### (Embodiment 1)

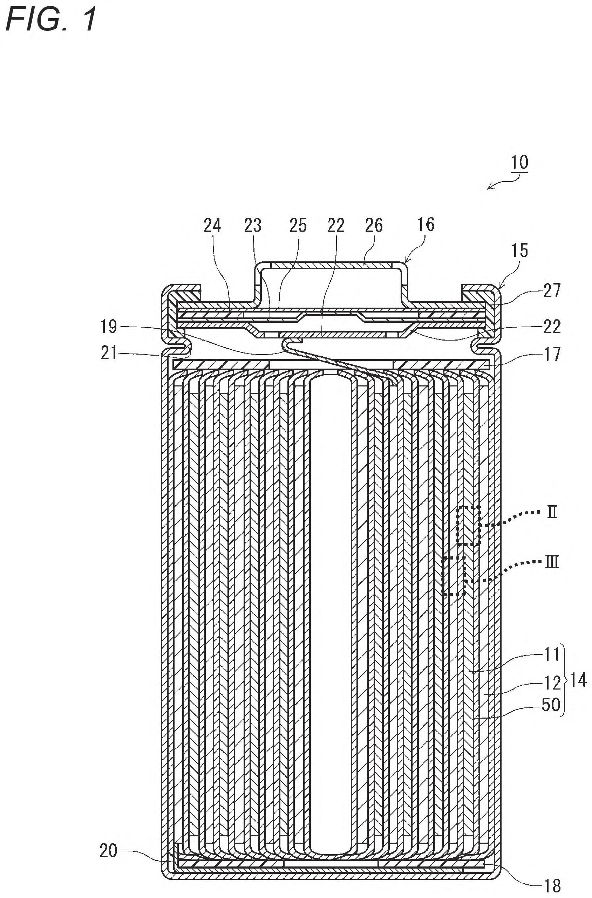

FIG. 1 is a schematic longitudinal sectional view of an example of a secondary battery (lithium secondary battery) according to Embodiment 1. In FIG. 1, the spacer and the space formed by the spacer are not shown. A cylindrical lithium secondary battery 10 as illustrated in FIG. 1 includes a cylindrical battery case, and a wound electrode group 14 and a nonaqueous electrolyte (not shown) housed in the battery case. The battery case includes a case main body 15, which is a metal container having a bottomed cylindrical shape, and a sealing body 16 sealing the opening of the case main body 15. A gasket 27 is disposed between the case main body 15 and the sealing body 16. The gasket 27 ensures the hermeticity of the battery case. In the case main body 15, insulating plates 17 and 18 are respectively disposed at both ends of the electrode group 14 in the winding axis direction.

The case main body 15 has a step portion 21 formed by, for example, partially pressing the sidewall of the case main body 15 from the outside. The step portion 21 may be formed, on the sidewall of the case main body 15, in an annular shape along the circumferential direction of the case main body 15. In this case, the sealing body 16 is supported on the surface of the step portion 21 on the opening side.

The sealing body 16 includes a filter 22, a lower valve body 23, an electrically insulating member 24, an upper valve body 25, and a cap 26. In the sealing body 16, these members are stacked in this order. The sealing body 16 is attached at the opening of the case main body 15 such that the cap 26 is positioned outside the case main body 15, and the filter 22 is positioned inside the case main body 15. Each of the above members constituting the sealing body 16 is, for example, disc-shaped or ring-shaped. The lower valve body 23 and the upper valve body 25 are connected to each other at their respective central portions, and an insulating member 24 is interposed between the respective peripheral portions. The filter 22 and the lower valve body 23 are connected to each other at their respective central portions. The upper valve body 25 and the cap 26 are connected to each other at their respective central portions. In other words, the members except the insulating member 24 are electrically connected to each other.

The lower valve body 23 is provided with a vent hole (not shown). Therefore, when the internal pressure of the battery case rises due to abnormal heat generation or other causes, the upper valve body 25 bulges toward the cap 26 and spaced away from the lower valve body 23. This cuts off the electrical connection between the lower valve body 23 and the upper valve body 25. When the internal pressure further rises, the upper valve body 25 ruptures, to let the gas escape though an aperture (not shown) formed in the cap 26.

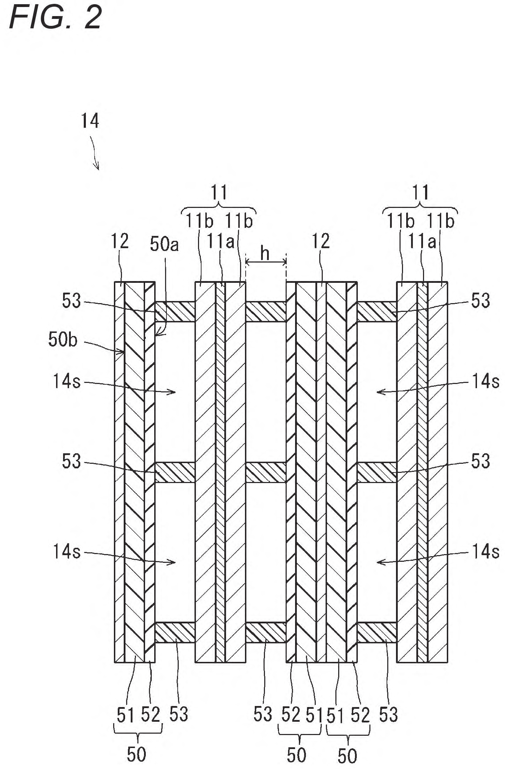

FIG. 2 is a partially enlarged view of the electrode group 14. FIG. 2 includes a portion in the vicinity of the positive electrode surrounded by a region II in FIG. 1 and a portion in the vicinity of the negative electrode surrounded by a region III in FIG. 1.

The electrode group 14 includes a positive electrode 11, a negative electrode 12, and a separator (a substrate 50 and a spacer 53). The positive electrode 11, the negative electrode 12, and the substrate 50 of the separator are all belt-shaped. The electrode group 14 is formed by winding the positive electrode 11, the negative electrode 12, and the separator (substrate 50), with the separator disposed between the positive electrode 11 and the negative electrode 12.

The positive electrode 11 includes a positive electrode current collector 11a, and a positive electrode mixture layer 11b. The positive electrode current collector 11a is electrically connected, via a positive electrode lead 19, to the cap 26 that functions as a positive electrode terminal. In FIG. 2, as the negative electrode 12, a negative electrode (negative electrode current collector) without lithium metal deposited thereon is shown. The negative electrode 12 is electrically connected, via a negative electrode lead 20, to the case main body 15 that functions as a negative electrode terminal.

The substrate 50 has a principal surface 50a facing the positive electrode 11, and a principal surface 50b facing the negative electrode 12. The substrate 50 of Embodiment 1 includes a porous sheet 51 and a composite material layer 52 (heat-resistant layer). The composite material layer 52 is formed, of two principal surfaces of the porous sheet 51, on the principal surface on the positive electrode 11 side. In Embodiment 1, the spacer 53 is formed on the principal surface 50a facing the positive electrode 11. The spacer 53 is formed on the composite material layer 52 and is in contact with the positive electrode 11. The spacer 53 forms a space 14s between the positive electrode 11 and the negative electrode 12 (between the negative electrode 12 and the substrate 50). In FIG. 2, the height h of the spacer 53 is shown.

In FIG. 2, the spacer 53 is disposed on the principal surface 50a facing the positive electrode 11 of the substrate 50, which however may be disposed on the principal surface 50b facing the negative electrode 12 of the substrate 50. The spacer 53 is formed on the composite material layer 52, which however may be formed on the porous sheet 51. The composite material layer 52 of the substrate 50 is disposed so as to face the positive electrode 11, which however may be disposed so as to face the negative electrode 12. The substrate 50 may be constituted only of the porous sheet 51.

In the lithium secondary battery 10, lithium metal deposits on the negative electrode 12 during charging. Since the space 14s is present between the positive electrode 11 and the negative electrode 12, the volume changes of the electrode group 14 associated with the deposition of lithium metal can be reduced, leading to improved cycle characteristics.

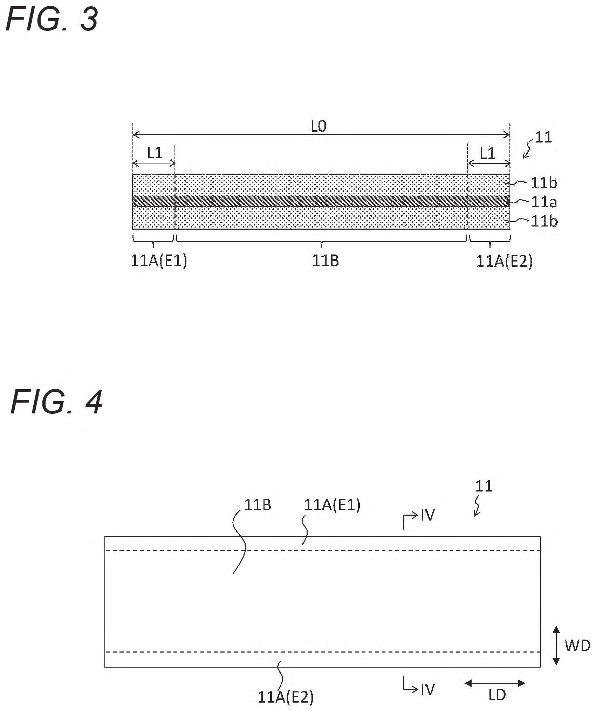

FIG. 3 is a schematic sectional view of the positive electrode 11, which is a sectional view taken along the line IV-IV in FIG. 4. FIG. 4 is a schematic top view of the positive electrode 11 in a plan view. In FIG. 4, LD denotes the length direction of the positive electrode 11, and WD denotes the width direction of the positive electrode 11.

The end portion of the belt-shaped positive electrode 11 include both end portions E1 and E2 in the width direction (WD direction) of the positive electrode 11. The positive electrode 11 (positive electrode mixture layer 11b) has regions 11A (region a) corresponding to the end portions E1 and E2, and a region 11B except the regions 11A. The positive electrode mixture layer 11b formed on one principal surface of the positive electrode current collector 11a and the positive electrode mixture layer 11b formed on the other principal surface of the positive electrode current collector 11a each have the regions 11A and 11B. The positive electrode 11 is formed such that, when the positive electrode 11 is viewed in plan (when viewed in the direction normal to the principal surface of the positive electrode 11), the positions of the regions 11A and 11B in the positive electrode mixture layer 11b disposed on both surfaces of the positive electrode current collector 11a almost coincide with each other.

The packed amount M1 of the positive electrode active material per unit area in the regions 11A (region A1) in the positive electrode mixture layer 11b (the packed amount per side of the positive electrode current collector 11a) is smaller than the packed amount M2 of the positive electrode active material per unit area in the region 11B (region A2) in the positive electrode mixture layer 11b (the packed amount per side of the positive electrode current collector 11a).

The M1/M2 is preferably 0.95 or less, and may be 0.5 or more and 0.95 or less. The packed amount M2 (the packed amount per side of the positive electrode current collector 11a) of the positive electrode active material per unit area in the region 11B (region A2) is preferably 100 g/m² or more and 300 g/m² or less.

In FIG. 3, L0 denotes a dimension in the width direction of the positive electrode 11. L1 denotes a dimension in the width direction of the region 11A. The L1/L0 may be, for example, 0.4 or less, may be 0.2 or less, and may be 0.016 or more and 0.400 or less (or 0.200 or less).

The L0 is, for example, 50 to 120 mm. The L1 may be, for example, 20 mm or less, and may be 5 mm or less. In FIG. 3, the width dimension L1 of the region 11A corresponding to the end portion E1 and the width dimension L1 of the region 11A corresponding to the end portion E2 are almost the same, which however may be different.

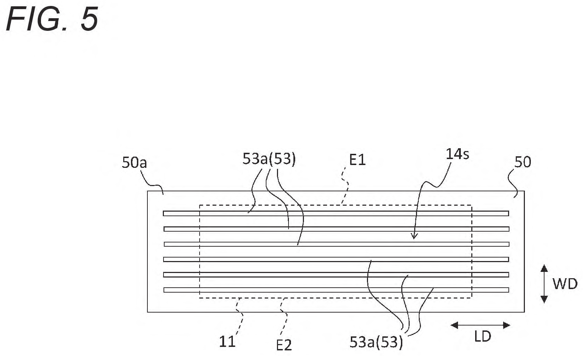

FIG. 5 illustrates an example of the planar shape of the spacer 53. In a plan view, a spacer 53 (linear protruding portions 53a) is disposed on one principal surface 50a of the substrate 50. The substrate 50 with the spacer 53 disposed thereon is provided on both sides (outer layer side and inner layer side) of the positive electrode 11. The dashed line in FIG. 5 represents the positive electrode 11 facing the substrate 50. In FIG. 5, LD denotes the length direction of the substrate 50 (positive electrode 11), and WD denotes the width direction of the substrate 50 (positive electrode 11). Note that the figures below are schematic, and the thickness, the width-to-length ratio of each member etc. do not necessarily reflect the actual values.

The spacer 53 in FIG. 5 includes a plurality of linear protruding portions 53a arranged in a stripe pattern. The plurality of linear protruding portions 53a are disposed in parallel to and spaced apart from each other along the length direction (LD direction) of the belt-shaped substrate 50. The regions without the spacer 53 constitute the space 14s. Although six linear protruding portions 53a are disposed in FIG. 5, the number of the linear protruding portions 53a is not limited thereto. The linear protruding portions 53a are disposed intermittently in the LD direction, which however may be disposed continuously. Although the spacer is arranged in a stripe pattern in FIG. 5, the arrangement pattern is not limited thereto, and the spacer may be arranged in a mesh pattern (honeycomb pattern etc.). The region(s) 11A (region A1) may have a portion P overlapping the protruding portion 53a.

In Embodiment 1, a cylindrical secondary battery including a wound electrode group is described. However, the secondary battery of the present embodiment is not limited to the form of Embodiment 1, and is also applicable to other forms. The shape of the lithium secondary battery can be selected as appropriate from various shapes, such as cylindrical, coin, prismatic, sheet-like, and flat shapes, depending on its intended use and the like. The form of the electrode group is not particularly limited, and may be a stacked type.

### (Supplementary notes)

The above description of embodiments discloses the following techniques.

### (Technique 1)

A secondary battery, comprising:
a positive electrode; a negative electrode; a separator disposed between the positive electrode and the negative electrode; and a nonaqueous electrolyte, wherein
the separator includes a sheet-like substrate, and a spacer disposed on a principal surface of the substrate,
the positive electrode contains a positive electrode active material,
the positive electrode has a region A1 of at least a part of an end portion of the positive electrode, and a region A2 except the region A1, and
a packed amount M1 of the positive electrode active material per unit area in the region A1 is smaller than a packed amount M2 of the positive electrode active material per unit area in the region A2.

### (Technique 2)

The secondary battery according to technique 1, wherein the region A1 has a portion P overlapping the spacer.

### (Technique 3)

The secondary battery according to technique 1 or 2, wherein the positive electrode which is belt-shaped and the negative electrode which is belt-shaped are wound, with the separator interposed therebetween.

### (Technique 4)

The secondary battery according to technique 3, wherein
the end portion of the positive electrode includes both widthwise end portions of the positive electrode, and
the region A1 is a region a corresponding to the both widthwise end portions of the positive electrode.

### (Technique 5)

The secondary battery according to any one of techniques 1 to 4, wherein a ratio M1/M2 of the packed amount M1 of the positive electrode active material per unit area in the region A1 to the packed amount M2 of the positive electrode active material per unit area in the region A2 is 0.95 or less.

### (Technique 6)

The secondary battery according to technique 5, wherein the packed amount M2 of the positive electrode active material per unit area in the region A2 is 100 g/m² or more and 300 g/m² or less.

### (Technique 7)

The secondary battery of any one of techniques 1 to 6, wherein at the negative electrode, lithium metal deposits during charging, and the lithium metal dissolves into the nonaqueous electrolyte during discharging.

### (Technique 8)

The secondary battery of any one of techniques 1 to 7, wherein the spacer includes protruding portions arranged in a predetermined repeating pattern.

### (Technique 9)

The secondary battery of any one of techniques 1 to 7, wherein a plurality of the protruding portions each having a linear shape are disposed in parallel to and spaced apart from each other along a longitudinal direction of the substrate.

### (Technique 10)

The secondary battery of any one of techniques 1 to 9, wherein the spacer includes a resin material.

### (Technique 11)

The secondary battery of any one of techniques 1 to 10, wherein the substrate includes a porous sheet containing a polymer material.

### (Technique 12)

The secondary battery according to technique 11, wherein the substrate further includes a composite material layer containing a resin material and inorganic particles.

### [Examples]

The secondary battery according to the present disclosure will be more specifically described below with reference to Examples and Comparative Examples. The present disclosure, however, is not limited to the following Examples.

### <<Batteries A1 to A6 and batteries B1 and B2>>

### (Production of positive electrode)

A layered rock-salt type lithium-containing transition metal oxide (NCA: positive electrode active material) containing Li, Ni, Co, and Al (the molar ratio of Li to the total of Ni, Co, and Al being 1.0), acetylene black (AB: conductive material), and polyvinylidene fluoride (PVdF: binder) were mixed in a mass ratio of NCA:AB:PVdF = 95:2.5:2.5, to which an appropriate amount of N-methyl-2-pyrrolidone (NMP) was further added and stirred, to prepare a positive electrode slurry. The obtained positive electrode slurry was applied onto both surfaces of a belt-shaped Al foil (positive electrode current collector) and dried, and then, the applied films of the positive electrode mixture were rolled using a roll. Lastly, the resultant laminate of the positive electrode current collector and the positive electrode mixture was cut to a predetermined electrode size. In this way, a positive electrode including positive electrode mixture layers (thickness per side 65 µm) on both surfaces of the positive electrode current collector was obtained.

The region A1 of the positive electrode was formed as a region a (the regions 11A in FIGS. 3 and 4) corresponding to both widthwise end portions of the positive electrode current collector. The width of the positive electrode (L0 in FIG. 3) was 57 mm, and the width of the region Al (L1 in FIG. 3) was set to 10 mm. The L1/L0 was 0.175.

The packed amount M1 of the positive electrode active material per unit area in the region A1 (regions 11A in FIGS. 3 and 4) and the packed amount M2 of the positive electrode active material per unit area in the region A2 (region 11B in FIGS. 3 and 4) were set to the values shown in Table 1. The packed amount of the positive electrode active material is a packed amount per side of the positive electrode current collector. The packed amount of the positive electrode active material was adjusted by changing the applying amount of the positive electrode slurry (amount applied per side of the positive electrode current collector).

### (Preparation of negative electrode)

A belt-shaped electrolytic copper foil (thickness 15 µm) was prepared as a negative electrode current collector.

### (Production of separator)

A 20-µm-thick microporous thin film made of polyethylene (porous sheet) was prepared.

A spacer material dispersion was prepared by mixing 50 parts by volume of electrically insulating particles (median diameter: 3 µm, volume resistivity: 10¹⁴ Ω·cm), 50 parts by volume of polyvinylidene fluoride (PVdF) serving as a resin material, and N-methyl-2-pyrrolidone (NMP) serving as a dispersion medium.

Next, using a dispenser, the spacer material dispersion was dispensed onto the microporous thin film, and the applied film was vacuum-dried, to form a spacer having a pattern (stripe pattern) as illustrated in FIG. 5. Specifically, protruding portions were formed in a stripe pattern on one principal surface of the microporous thin film. In this way, a separator having the substrate and the spacer was obtained.

The linear protruding portions constituting the spacer each had a width of 0.25 mm and a height of 30 µm.

### (Preparation of nonaqueous electrolyte)

Ethylene carbonate (EC) and dimethyl carbonate (DMC) were mixed in a volume ratio of EC:DMC = 30:70. In the resultant mixed solvent, LiPF₆ and LiBF₂(C₂O₄) were dissolved at concentrations of 1 mol/L and 0.1 mol/L, respectively, to prepare a liquid nonaqueous electrolyte.

### (Fabrication of battery)

In an inert gas atmosphere, the positive electrode and the negative electrode current collector were spirally wound, with the separator interposed therebetween, to prepare an electrode group. At this time, the separator was disposed such that the spacer faced the positive electrode. The region A1 had a portion P overlapping the spacer. The electrode group was housed in a bag-shaped outer body made of a laminate sheet having an Al layer, and after the nonaqueous electrolyte was injected thereinto, the outer body was sealed, to complete a lithium secondary battery.

### [Evaluation of cycle characteristics (durability)]

The obtained batteries were each subjected to a charge-discharge test. In the charge-discharge test, the battery was charged under the following conditions in a constant temperature bath at 25 °C, and then, after left to stand for 20 minutes, discharged under the following conditions.

### (Charging)

A constant-current charging was performed at a current of 0.5C until the battery voltage reached 4.2 V. Subsequently, a constant-voltage charging was performed at 4.2 V until the current value reached 15 mA.

### (Discharging)

A constant-current discharging was performed at a current of 0.5C until the battery voltage reached 2.5 V.

With the above charging and discharging taken as one cycle, charging and discharging were repeatedly performed. At this time, charging and discharging were repeated until the discharge capacity fell below 80% of the discharge capacity at the 1st cycle, and the number of cycles repeated until the last cycle at which the discharge capacity was 80% or more of the discharge capacity at the 1st cycle was determined. When the above number of cycles is large, the cycle characteristics (durability) was judged as favorable.

The evaluation results are shown in Table 1. In Table 1, A1 to A6 are of Examples, and B1 and B2 are of Comparative Examples.

**[Table 1]**

| battery | packed amount M1 of positive electrode active material in region A1 (g/m²) | packed amount M2 of positive electrode active material in region A2 (g/m²) | M1/M2 | durability (number of cycles) |
|---|---|---|---|---|
| A1 | 225 | 250 | 0.9 | 550 |
| A2 | 237.5 | 250 | 0.95 | 540 |
| A3 | 245 | 250 | 0.98 | 504 |
| A4 | 125 | 250 | 0.5 | 545 |
| A5 | 270 | 300 | 0.9 | 514 |
| A6 | 90 | 100 | 0.9 | 642 |
| B1 | 250 | 250 | 1 | 103 |
| B2 | 100 | 100 | 1 | 313 |

In the batteries A1 to A6, as compared to the batteries B1 and B2, excellent cycle characteristics were obtained.

### [Industrial Applicability]

The secondary battery of the present disclosure can be used in electronic devices, such as mobile phones, smartphones, and tablet terminals, electric cars including hybrids and plug-in hybrids, and home storage battery systems combined with a solar cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: lithium secondary battery, 11: positive electrode, 11A: region A1, 11B: region A2, 12: negative electrode, 14: electrode group, 14s: space, 15: case main body, 16: sealing body, 23: lower valve body, 25: upper valve body, 50: substrate, 51: porous sheet, 52: composite material layer, 53: spacer, 53a: protruding portion

## Claims

1. A secondary battery, comprising:
a positive electrode; a negative electrode; a separator disposed between the positive electrode and the negative electrode; and a nonaqueous electrolyte, wherein
the separator includes a sheet-like substrate, and a spacer disposed on a principal surface of the substrate,
the positive electrode contains a positive electrode active material,
the positive electrode has a region A1 of at least a part of an end portion of the positive electrode, and a region A2 except the region A1, and
a packed amount M1 of the positive electrode active material per unit area in the region A1 is smaller than a packed amount M2 of the positive electrode active material per unit area in the region A2.

2. The secondary battery according to claim 1, wherein the region A1 has a portion P overlapping the spacer.

3. The secondary battery according to claim 1, wherein the positive electrode which is belt-shaped and the negative electrode which is belt-shaped are wound, with the separator interposed therebetween.

4. The secondary battery according to claim 3, wherein
the end portion of the positive electrode includes both widthwise end portions of the positive electrode, and
the region A1 is a region a corresponding to the both widthwise end portions of the positive electrode.

5. The secondary battery according to claim 1, wherein a ratio M1/M2 of the packed amount M1 of the positive electrode active material per unit area in the region A1 to the packed amount M2 of the positive electrode active material per unit area in the region A2 is 0.95 or less.

6. The secondary battery according to claim 5, wherein the packed amount M2 of the positive electrode active material per unit area in the region A2 is 100 g/m² or more and 300 g/m² or less.

7. The secondary battery of any one of claims 1 to 6, wherein at the negative electrode, lithium metal deposits during charging, and the lithium metal dissolves into the nonaqueous electrolyte during discharging.

8. The secondary battery of any one of claims 1 to 6, wherein the spacer includes protruding portions arranged in a predetermined repeating pattern.

9. The secondary battery of any one of claims 1 to 6, wherein a plurality of the protruding portions each having a linear shape are disposed in parallel to and spaced apart from each other along a longitudinal direction of the substrate.

10. The secondary battery of any one of claims 1 to 6, wherein the spacer includes a resin material.

11. The secondary battery of any one of claims 1 to 6, wherein the substrate includes a porous sheet containing a polymer material.

12. The secondary battery according to claim 11, wherein the substrate further includes a composite material layer containing a resin material and inorganic particles.
